# EUROPEAN PATENT APPLICATION

(11) **EP 4 651 294 A1**
(43) Date of publication of application: **19.11.2025**
(21) Application number: 24888965.1
(22) Date of filing: 17.10.2024
(51) Int. Cl.: H01M 50/502, H01M 50/59, H01M 10/04, H01M 50/507

(54) **BATTERY MODULE AND BATTERY PACK COMPRISING SAME**

(30) Priority: 06.11.2023 KR 20230151494
(71) Applicant: LG Energy Solution, Ltd., Seoul 07335 (KR)
(72) Inventor: HAN, Seungwon, Daejeon 34122 (KR); KONG, Seungjin, Daejeon 34122 (KR); SIN, Jehwan, Daejeon 34122 (KR); LEE, Borahm, Daejeon 34122 (KR)
(74) Representative: Plasseraud IP
(86) International application number: PCT/KR2024/015757
(87) International publication number: WO 2025/100772

(57) **Abstract**

A battery module according to an embodiment of the present disclosure includes a battery cell stack in which a plurality of battery cells is stacked, a module case for accommodating the battery cell stack, a busbar frame disposed on one side of the battery cell stack, one or more busbars disposed in the busbar frame, and one or more reinforcing members disposed in the busbar frame.

## Description

### [TECHNICAL FIELD]

The present disclosure relates to a battery module and a battery pack including the same, and more specifically, to a battery module including a busbar frame having reinforced rigidity and a battery pack including the same.

### [BACKGROUND ART]

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

A battery module is configured by electrically connecting a plurality of cells using a busbar, and electrode leads of battery cells are connected to the busbar.

In such a battery module, when the electrode leads of the battery cells are connected to the busbar, deformation such as bending may occur in a busbar frame in which the busbar is mounted.

### [DETAILED DESCRIPTION OF INVENTION]

### [TECHNICAL PROBLEMS]

An object of the present disclosure devised to solve the problems described above is to provide a battery module capable of minimizing bending of a busbar frame by reinforcing the rigidity of the busbar frame, and a battery pack including the same.

### [TECHNICAL SOLUTION]

A battery module according to an embodiment of the present disclosure includes a battery cell stack in which a plurality of battery cells is stacked, a module case for accommodating the battery cell stack, a busbar frame disposed on one side of the battery cell stack, one or more busbars disposed in the busbar frame, and one or more reinforcing members disposed in the busbar frame.

Furthermore, the busbar frame may include a groove into which each reinforcing member is inserted.

Furthermore, the groove may include a pair of bent surface portions disposed on both sides of the groove and bent in a direction of the busbars, and the reinforcing member may include a pair of wing portion provided on both sides of the reinforcing member and disposed on the pair of bent surface portions.

Furthermore, the busbar frame includes one or more busbar mounting portions to which the busbars are coupled.

Furthermore, the reinforcing member may be disposed on the busbar mounting portion.

Furthermore, the busbar mounting portion may include a groove into which the reinforcing member is inserted.

Furthermore, the groove is formed in a concave shape in the direction of the battery cell stack.

Furthermore, the busbar may be disposed in front of the reinforcing member in the busbar mounting portion.

Furthermore, the reinforcing member may be made of a metal material, and preferably, made of a steel plate.

Furthermore, the busbar may be connected to electrode leads of the battery cells.

Furthermore, the busbar frame may be disposed on each of both sides of the battery cell stack, and the reinforcing member may be disposed in each of the busbar frames disposed on both sides of the battery cell stack.

Furthermore, the battery module may further include an insulating cover disposed on the outside of the busbar frame.

Furthermore, the battery module may further include end plate disposed on the outside of the insulating cover.

### [EFFECT OF INVENTION]

The battery module and pack according to the present disclosure have the effect of minimizing bending of the busbar frame by reinforcing the rigidity of the busbar frame.

### [BRIEF DESCRIPTION OF THE DRAWING]

FIG. 1 is a perspective view of a battery module according to an embodiment of the present disclosure.
FIG. 2 is an exploded perspective view of the battery module according to an embodiment of the present disclosure.
FIG. 3 is a perspective view of a battery cell according to an embodiment of the present disclosure.
FIG. 4 is a perspective view of a terminal busbar according to an embodiment of the present disclosure.
FIG. 5 is a perspective view of an insulating cover and an end plate according to an embodiment of the present disclosure.
FIG. 6 is a front view of a busbar frame in an embodiment of the present disclosure.
FIG. 7 is a diagram showing the busbar frame from which a busbar has been removed in FIG. 6.
FIG. 8 is a diagram showing a reinforcing member and a busbar being combined with the busbar frame in an embodiment of the present disclosure.
FIG. 9 is a perspective view of a reinforcing member in an embodiment of the present disclosure.
FIG. 10 is a partial cross-sectional view of the busbar frame in an embodiment of the present disclosure.
FIG. 11 is a diagram showing bending of the busbar frame.
FIG. 12 is a diagram showing a battery pack according to an embodiment of the present disclosure.
FIG. 13 is a perspective view of a vehicle equipped with the battery pack in an embodiment of the present disclosure.

### [BEST MODE FOR CARRYING OUT THE INVENTION]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

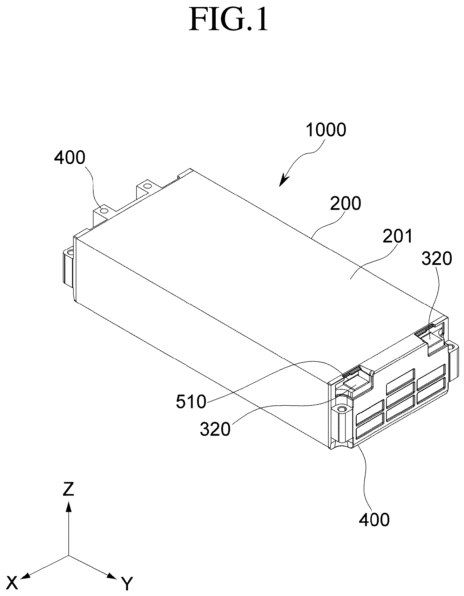

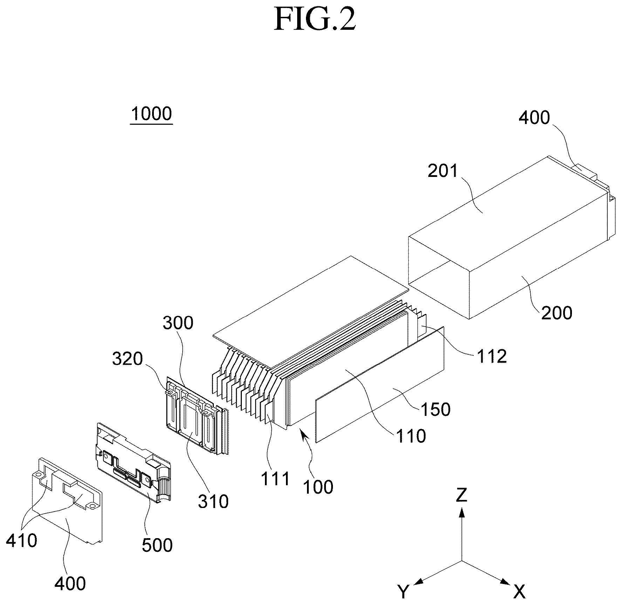

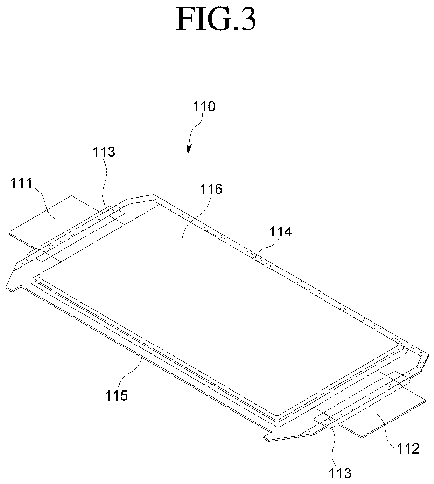

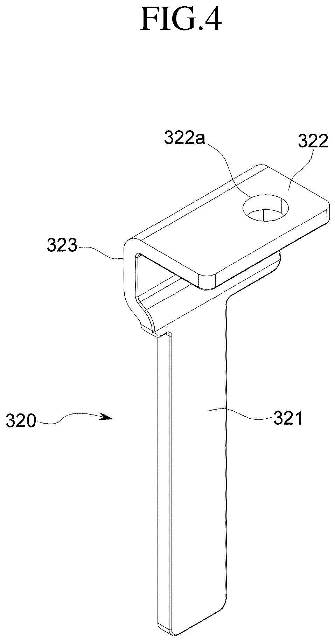

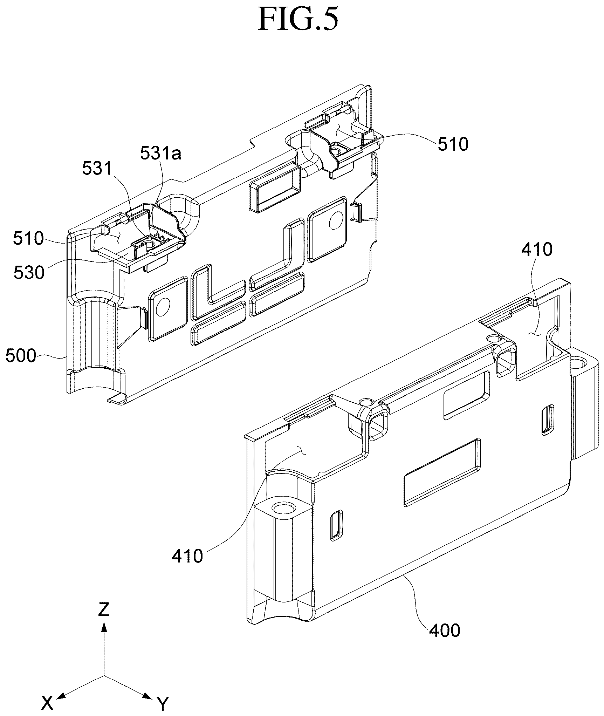

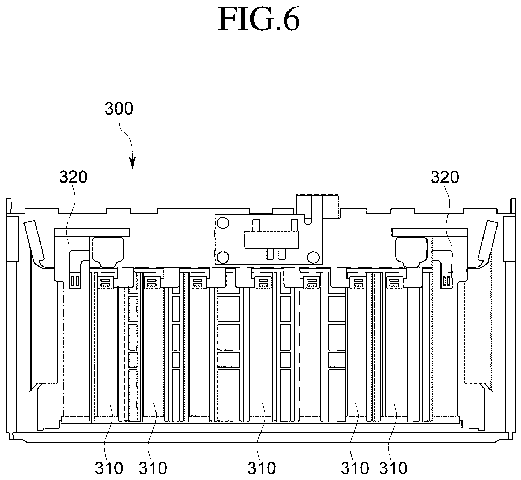

A battery module 1000 according to an embodiment of the present disclosure will be described in detail with reference to the drawings. FIG. 1 is a perspective view of a battery module according to the present disclosure, FIG. 2 is an exploded perspective view of the battery module according to the present disclosure, FIG. 3 is a perspective view of a battery cell in the present disclosure, FIG. 4 is a perspective view of a terminal busbar in the present disclosure, FIG. 5 is a perspective view of an insulating cover and an end plate in the present disclosure, and FIG. 6 is a front view of a busbar frame in the present disclosure.

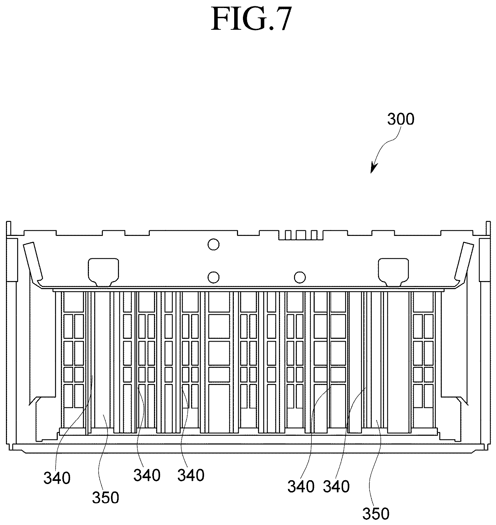

FIG. 7 is a diagram showing the busbar frame from which a busbar has been removed in FIG. 6.

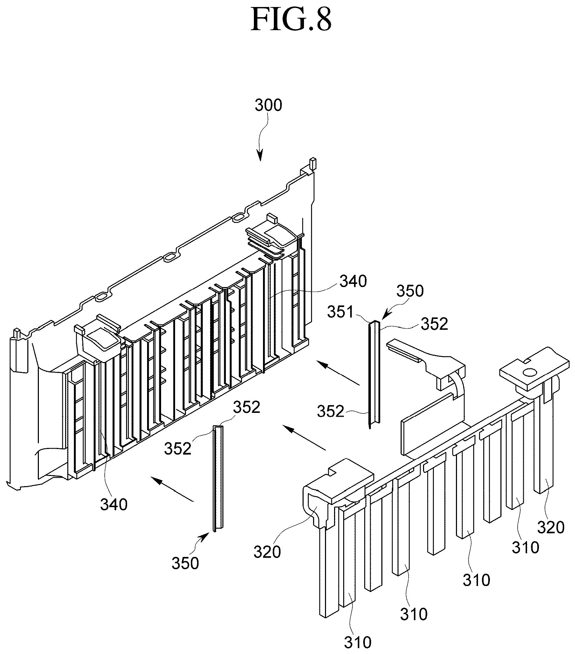

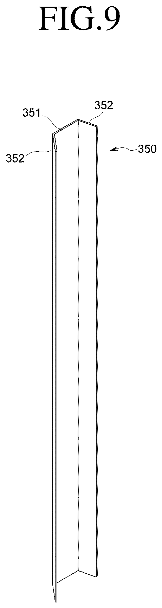

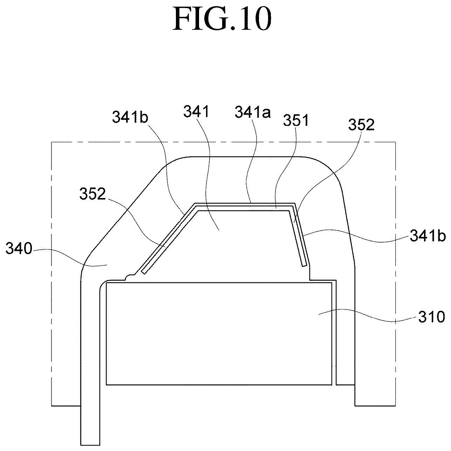

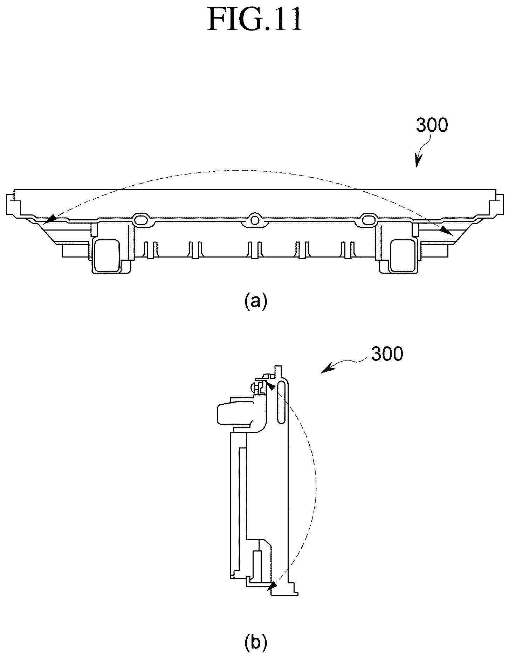

FIG. 8 is a diagram showing a reinforcing member and a busbar being combined with the busbar frame in an embodiment of the present disclosure, FIG. 9 is a perspective view of a reinforcing member in an embodiment of the present disclosure, FIG. 10 is a partial cross-sectional view of the busbar frame in an embodiment of the present disclosure, and FIG. 11 is a diagram showing bending of the busbar frame.

The battery module 1000 according to one embodiment of the present disclosure may include a battery cell stack 100 in which a plurality of battery cells 110 is stacked, a module case 200 that accommodates the battery cell stack 100, a busbar frame 300 positioned on one side and/or the other side of the battery cell stack 100, an insulating cover 500 positioned on the outside of the busbar frame 300, and an end plate 400 positioned on the outside of the insulating cover 500.

The battery cell stack 100 may be formed by stacking the plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as the longitudinal direction of the battery cell stack 100 and may be the Y-axis direction in the figure. In addition, the direction from the upper surface to the lower surface of the battery cell stack 100 or the opposite direction may be defined as the width direction of the battery cell stack 100 and may be the Z-axis direction in the figure.

The longitudinal direction of the battery cell stack 100 may be substantially the same as the longitudinal direction of the battery cells 110. Electrode leads 111 and 112 of the battery cells 110 may be positioned on the front and rear sides of the battery cell stack 100, and busbars 310 and 320 of the battery module 1000 may be positioned close to the front and rear sides of the battery cell stack 100 to easily form electrical connections with the electrode leads 111 and 112.

The battery cell 110 may be provided as a pouch-type battery cell, and the number of battery cells stacked per unit area may be maximized in the case of the pouch-type battery cell. However, the battery cell 110 does not necessarily have to be provided in a pouch type, and may be provided in a square, cylindrical, or other various shapes.

The battery cell 110 provided in a pouch type may include an electrode assembly and a cell case 115 that accommodates the electrode assembly (refer to FIG. 3).

The cell case 115 of the battery cell 110 may be a pouch-type cell case 115 for accommodating the electrode assembly. The cell case 115 includes a lower case and an upper case that covers the lower case, and the upper and lower cases may be formed as one piece. In addition, as illustrated in FIG. 3, connecting portions of the upper and lower cases may be formed in a structure in which they are bent and folded. In addition, as illustrated, the upper case may completely cover the lower case, and a sealing portion 114 may be formed at the edge.

The upper and lower cases may both be formed in a laminate structure including an inner covering layer, a metal layer, and an outer covering layer. The inner covering layer is located on the inside of the cell case 115 based on the metal layer, and the inner covering layer needs to have insulation and electrolytic resistance since it is in direct contact with the electrode assembly, and in order to achieve sealing, a sealing area where the inner layers are thermally bonded is required to have excellent thermal bonding strength. The metal layer is located between the inner covering layer and the outer covering layer and corresponds to a barrier layer that prevents moisture or various gases from penetrating into the battery from the outside, and a preferable material for the metal layer in contact with the inner covering layer may be an aluminum (Al) thin film that is lightweight and has excellent formability. The outer covering layer is located on the outside of the cell case 115 based on the metal layer, and the outer covering layer can use a heat-resistant polymer that has excellent tensile strength, moisture permeability, and air permeability to protect the electrode assembly while ensuring heat resistance and chemical resistance, and for example, nylon or polyethylene terephthalate may be used for the outer covering layer.

A receiving groove 116 may be formed in the upper and lower cases, and the electrode assembly may be received in the receiving groove 116 of the upper and lower cases.

The electrode assembly accommodated in the cell case 115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 111 and 112 respectively connected to the two electrode tabs by welding.

One of the two electrode leads 111 and 112 may be a positive lead connected to a positive tab, and the other may be a negative lead connected to a negative tab.

A lead film 113 may be attached to each of the electrode leads 111 and 112. The lead film 113 coupled to the electrode leads 111 and 112 is positioned between the electrode leads 111 and 112 and the cell case 115 to prevent a short circuit from occurring between the electrode leads 111 and 112 and the cell case 115 and to improve sealing power, thereby preventing leakage of the electrolyte, and the like.

The two electrode leads 111 and 112 are illustrated as being respectively positioned on both sides of the electrode assembly, but may be positioned on only one side of the electrode assembly depending on the arrangement of the electrode tabs.

The module case 200 may be for protecting the battery cell stack 100 and electrical components connected thereto from external physical impact, and the module case 200 may accommodate the battery cell stack 100 and the electrical components connected thereto in the internal space thereof.

The module case 200 may have various structures, and for example, the module case 200 may have a mono-frame structure. Here, a mono-frame may be in the form of a metal plate in which the upper surface, the lower surface, and both side surfaces are integrated. The mono-frame may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining the upper plate on the upper side of the U-shaped frame, which is a metal plate in which the lower side and both sides are combined or integrated, and each frame or plate may be manufactured by press molding. In addition, the module case 200 may have an L-shaped frame structure in addition to a mono-frame or a U-shaped frame, and may be provided as in various structures not described in the above-described examples.

The structure of the module case 200 may be provided in an open form in the longitudinal direction of the battery cell stack 100. The front and rear sides of the battery cell stack 100 may not be covered by the module case 200. The electrode leads 111 and 112 of the battery cells 110 may not be covered by the module case 200. The front and rear of the battery cell stack 100 may be covered by the busbar frame 300, the end plate 400, or the busbars 310 and 320 which will be described later, and accordingly, the front and rear of the battery cell stack 100 can be protected from external physical impacts and the like.

A compression pad 150 may be positioned between the battery cell stack 100 and one side of the inner surface of the module case 200.

The compression pad 150 may be disposed to face the battery cell 110 positioned at the outermost side of the battery cell stack 100 in the X-axis direction in the figure.

Further, although not shown, a thermally conductive resin may be injected between the battery cell stack 100 and the inner surface of the module case 200, and a thermally conductive resin layer (not shown) may be formed between the battery cell stack 100 and one side of the inner surface of the module case 200 by the injected thermally conductive resin. Here, the thermally conductive resin layer may be positioned on the Z-axis of the battery cell stack 100, and the thermally conductive resin layer may be formed between the battery cell stack 100 and the bottom surface positioned on the -Z-axis of the module case 200.

The busbar frame 300 may be positioned on one side of the battery cell stack 100 and may cover one side of the battery cell stack 100 while guiding connection between the battery cell stack 100 and an external device. Specifically, the busbar frame 300 may be positioned on the front or rear of the battery cell stack 100 as illustrated, or may also be positioned on the upper surface, lower surface, or side surface. At least one of the busbars 310 and 320 and a module connector may be mounted on the busbar frame 300. As illustrated in FIG. 2, one side of the busbar frame 300 may be connected to one side or the other side of the battery cell stack 100, and the other side of the busbar frame 300 may be connected to the busbars 310 and 320.

The busbar frame 300 may include one or more busbar mounting portions 340 on which the busbars 310 and 320 are coupled and mounted.

The busbars 310 and 320 may be mounted on the front of the busbar mounting portion 340 of the busbar frame 300, and a plurality of busbar mounting portions 340 may be disposed to be spaced apart in the width direction of the battery module 1000.

The busbar frame 300 may include an electrically insulating material and may be made of a plastic injection molded product. The busbar frame 300 may restrict the busbars 310 and 320 from contacting other portions of the battery cells 110 other than the portion where the busbars are connected to the electrode leads 111 and 112, and may prevent an electrical short circuit from occurring.

The busbar frame 300 may be positioned on one side and the other side of the battery cell stack 100.

The busbars 310 and 320 may be mounted on the busbar mounting portion 340 on one side of the busbar frame 300 and may be used to electrically connect the battery cell stack 100 or the battery cells 110 and an external device circuit. A plurality of busbars 310 and 320 may be provided and may be positioned between the battery cell stack 100 or the busbar frame 300 and the end plate 400, thereby being protected from external impacts, and minimizing deterioration of durability due to external moisture, etc.

The busbars 310 and 320 may be electrically connected to the battery cell stack 100 through the electrode leads 111 and 112 of the battery cells 110.

Specifically, the electrode leads 111 and 112 of the battery cells 110 may be bent after passing through a lead slit formed in the busbar frame 300 and connected to the busbars 310 and 320. The electrode leads 111 and 112 of the battery cell 110 may be connected to both sides of the busbars 310 and 320, the electrode lead 111 connected to one side of each of the busbars 310 and 320 may be a positive lead, and the electrode lead 112 connected to the other side of each of the busbars 310 and 320 may be a negative lead.

The battery cells 110 constituting the battery cell stack 100 may be connected in series or in parallel by the busbars 310 and 320.

The busbars 310 and 320 may include a terminal busbar 320 for electrically connecting one battery module 1000 to another battery module 1000. At least a portion of the terminal busbar 320 may be exposed to the outside of the end plate 400 to be connected to another battery module 1000, and the end plate 400 may include a terminal opening 410 for this purpose.

The terminal busbar 320 may have one end (a second portion 322) exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cell 110 and the second portion 322 exposed to the outside through the terminal opening 410. In addition, the terminal busbar 320 may further include a bent portion 323 formed between the first portion 321 and the second portion 322.

In the terminal busbar 320, the first portion 321 may be connected to the second portion 322 through the bent portion 323, and one side of the first portion 321 and one side of the second portion 322 may be perpendicular to each other. That is, by forming the bent portion 323 in the terminal busbar 320, the second portion 322 protrudes and is mounted on a mounting portion 530 of the insulating cover 500, and the second portion 322 may be electrically connected to an inter-busbar (not shown). A joining hole 322a is formed in the second portion 322 constituting one end of the terminal busbar 320, and the second portion 322 of the terminal busbar 320 may be fixed by a fixing pin (not shown) inserted into the joining hole 322a.

Meanwhile, as shown in FIG. 6 to FIG. 10, the busbar frame 300 may further include one or more reinforcing members 350.

The reinforcing members 350 are used to reinforce the rigidity of the busbar frame 300 and may be vertically extended and coupled to the busbar frame 300 as shown in FIG. 7 to FIG. 9.

In one embodiment of the present disclosure, each of the reinforcing members 350 may include a central portion 351 and a pair of wing portions 352 bent forward on both sides of the central portion 351, and the central portion 351 and wing portions 352 may be formed integrally.

The central portion 351 may be vertically extended in a flat plate shape, and may be formed with a height H much greater than the left-right width.

The pair of wing portions 352 may be bent forward from both sides of the central portion 351. The angle at which the pair of wing portions 352 are bent from the central portion 351 may be an acute angle, and the bending angles of the left and right sides may be different. FIG. 10 illustrates an example in which the bending angle of the right wing portion 352 is greater than that of the left wing portion 352.

The height H of the reinforcing member 350 may be less than that of the busbar frame 300 and may be similar to the vertical length of the busbars 310 and 320.

The reinforcing members 350 may be formed of a metal material, and may be made of a steel plate, for example. FIG. 8 illustrates an example in which two reinforcing members 350 are joined to the busbar frame 300, but the number of reinforcing members 350 may be changed.

In the busbar frame 300, the reinforcing member 350 may be coupled to the busbar mounting portion 340. Specifically, the busbar mounting portion 340 may include a concave groove 341 on the inside as shown in FIG. 10, and the reinforcing member 350 may be coupled to the groove 341. The groove 341 may be formed in a concave shape toward the battery cell stack 100 and may be formed to correspond to the reinforcing member 350. In the present embodiment, the groove 341 may include a central portion 341a and a pair of bent surface portions 341b located on both sides of the central portion 341a.

The central portion 341a of the groove 341 may extend vertically in a flat shape and correspond to the central portion 351 of the reinforcing member 350. Therefore, the central portion 351 of the reinforcing member 350 can be disposed in contact with the central portion 341a of the groove 341.

The pair of bent surface portions 341b may be bent forward (in the direction of the busbars 310 and 320) from both sides of the central portion 341a, and thus the bent surface portions 341b can form inclined surfaces with respect to the central portion 341a. The pair of wing portions 352 of the reinforcing member 350 can be disposed in contact with the pair of bent surface portions 341b.

As another example, the groove 341 may be formed in a shape in which the pair of bent surface portions 341b are connected to each other without the central portion 341a, and in this case, the reinforcing member 350 may be configured in a form in which the pair of wing portions 352 are connected to each other without the central portion 351 to correspond to the groove 341 (left reinforcing member 350 in FIG. 8).

In this manner, the groove 341 of the busbar mounting portion 340 is formed to correspond to the reinforcing member 350, and thus the reinforcing member 350 can be closely coupled to the groove 341, and the busbars 310 and 320 can be disposed in front of the reinforcing member 350 in the busbar mounting portion 340. That is, the busbars 310 and 320 can cover the reinforcing member 350 in front of the reinforcing member 350.

The reinforcing member 350 can be combined with the busbar frame 300 to improve the rigidity of the busbar frame 300, thereby minimizing bending of the busbar frame 300.

Although an example in which two reinforcing members 350 are combined with the busbar frame 300 is illustrated in FIG. 7 in the present embodiment, the reinforcing members 350 may be coupled to all busbar mounting portions 340 where the busbars 310 and 320 are disposed.

FIG. 11 illustrates bending of the busbar frame 300 when the electrode leads 111 and 112 of the battery cell 110 are connected to the busbars 310 and 320.

The electrode leads 111 and 112 of the battery cell 110 may be connected to the busbars 310 and 320 by welding, and at this time, a pressurizing force may be applied using a jig (not shown) to ensure that the electrode leads 111 and 112 of the battery cell 110 are tightly attached to the busbars 310 and 320.

At this time, the busbar frame 300, which is a plastic injection molded product, may be welded while being deformed by the bending force, and even after the pressure is removed, the shape of the busbar frame 300 may not be restored to its original state due to the restraining relationship with the electrode leads 111 and 112, or even if restored, a tensile force may be applied to the electrode leads 111 and 112.

As shown in FIG. 11, the busbar frame 300 may be deformed in the width direction or the height direction. FIG. 11(a) illustrates bending in the width direction bending (dotted line portion) of the busbar frame 300, and FIG. 11(b) illustrates bending in the height direction (dotted line portion) of the busbar frame 300.

In one embodiment of the present disclosure, as described above, by combining the reinforcing member 350 with the busbar frame 300, the rigidity of the busbar frame 300 can be improved and bending of the busbar frame 300 can be minimized. In addition, by minimizing deformation of the busbar frame 300 in the process of welding the busbar frame 300 and the electrode leads 111 and 112, the possibility of tension occurring in the electrode leads 111 and 112 within the battery cell stack 100 is eliminated.

The end plate 400 may be intended to protect the battery cell stack 100 and the electrical components connected thereto from external physical impact by sealing the open surface of the module case 200. To this end, the end plate 400 may be manufactured from a material having a predetermined strength, and for example, the end plate 400 may include a metal such as aluminum or a plastic material.

The terminal opening 410 may be formed in the end plate 400. The terminal opening 410 may be disposed on each of both sides of the end plate 400, and a part of the insulating cover 500 and one end (the second portion 322) of the terminal busbar 320 may be exposed through the terminal openings 410.

In addition, a connector opening may be positioned between the terminal openings 410 disposed on both sides of the end plate 400, and the module connector may be exposed to the outside through the connector opening.

The end plate 400 may be combined with the module case 200 while covering the busbar frame 300 or the busbars 310 and 320 located on one side of the battery cell stack 100. Each corner of the end plate 400 may be combined with the corresponding corner of the module case 200 by welding, bolt fastening, hook fastening, or the like.

The end plate 400 may be positioned on one side and the other side of the module case 200 to cover both sides of the battery cell stack 100. In the present embodiment, an example in which the end plate 400 is positioned on the front and rear sides of the module case 200 is illustrated.

In addition, the insulating cover 500 for electrical insulation may be positioned between the end plate 400 and the busbar frame 300. That is, the busbar frame 300, the insulating cover 500, and the end plate 400 may be sequentially positioned from the battery cell stack 100 to the outside. Like the end plate 400, a plurality of busbar frames 300 and a plurality of insulating covers 500 may be provided.

The insulating cover 500 may include an electrically insulating material and can block the busbars 310 and 320 from contacting the end plate 400.

The insulating cover 500 may include the opening 510 and a mounting portion 530. The opening 510 may be disposed on each of both sides of the upper portion of the insulating cover 500, and one end (the second portion 322) of the terminal busbar 320 can be exposed through the opening 510.

In addition, a connector opening may be positioned between the openings 510 disposed on both sides of the insulating cover 500, and the module connector may be exposed to the outside through the connector opening.

The insulating cover 500 may be located on the inner surface of the end plate 400, and may be in close contact with the inner surface of the end plate 400, but the present disclosure is not limited thereto.

As described above, one end (the second portion 322) of the terminal busbar 320 can be exposed through the opening 510, and the exposed one end (the second portion 322) of the terminal busbar 320 can be mounted on the mounting portion 530. Accordingly, the mounting portion 530 can be disposed to be adjacent to the opening 510 and can be positioned on the upper outer surface.

The second portion 322 of the terminal busbar 320 can be mounted on the upper surface of the mounting portion 530, and thus the upper surface of the mounting portion 530 can form a mounting surface. In addition, as illustrated in FIG. 5, the mounting portion 530 may include a fixing member 531 for fixing the terminal busbar 320.

The fixing member 531 may fix the second portion 322 of the terminal busbar 320 and may include a fixing hole 531a.

A fixing pin (not shown) can be inserted into the fixing hole 531a. The fixing pin (not shown) inserted into the joining hole 322a formed in the second portion 322 of the terminal busbar 320 is fixed by being coupled to the fixing hole 531a, and thus the second portion 322 of the terminal busbar 320 can be fixed to the insulating cover 500.

Therefore, the second portion 322 of the terminal busbar 320 is mounted on the mounting portion 530 of the insulating cover 500 and mounted on and comes into contact with the fixing member 531 disposed in the mounting portion 530.

In addition, a terminal cover (not shown) covering the exposed one end (the second portion 322) of the terminal busbar 320 may be disposed on the insulating cover 500.

Incidentally, electrical connection between battery modules 1000 may be made through an inter-busbar (not shown). The inter-busbar is a member for connecting one battery module 1000 to another adjacent battery module 1000 or a battery disconnection unit (BDU), and may be connected to the exposed one end (second portion 322) of the terminal busbar 320. For example, the inter-busbar may be connected by overlapping one end (second portion 322) of the terminal busbar 320.

After one end of the inter-busbar is disposed to overlap the second portion 322 of the terminal busbar 320, the fixing pin is sequentially inserted into a joining hole of the inter-busbar and the joining hole 322a of the second portion 322 of the terminal busbar 320, and then the fixing pin is fixed to the fixing hole 531a of the mounting portion 530, and thus the inter-busbar can be connected to the terminal busbar 320.

Then, the second portion 322 of the terminal busbar 320 can be fixed to the insulating cover 500 along with the inter-busbar by the fixing pin.

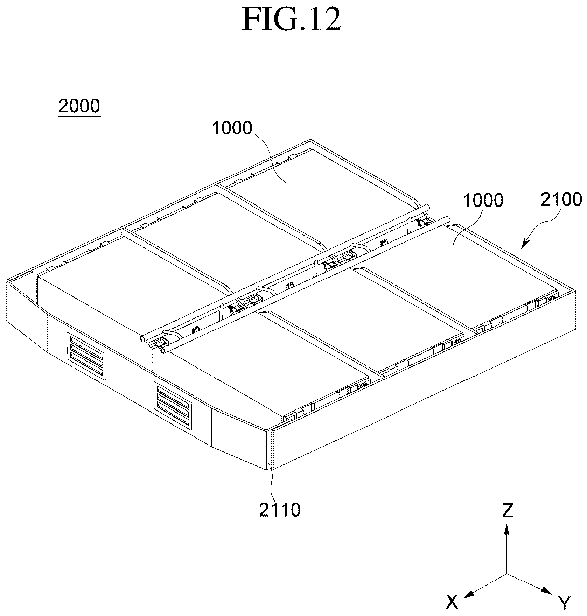

One or more battery modules 1000 according to the present disclosure as described above can form a battery pack 2000. As illustrated in FIG. 12, the battery pack 2000 according to an embodiment of the present disclosure may accommodate at least one battery module 1000 inside a pack case 2100, and may include various control and protection systems such as a battery management system (BMS), a cooling system, etc.

The pack case 2100 may include a lower housing 2110 and an upper housing (not shown) coupled to the upper side of the lower housing 2110, and a plurality of battery modules 1000 may be accommodated in the internal space of the lower housing 2110 and the upper housing.

Although an example in which a plurality of battery modules 1000 is accommodated inside the battery pack 2000 is illustrated in the embodiment of the present disclosure, a plurality of battery cells 110 may be directly disposed inside the battery pack 2000.

The battery module 1000 and the battery pack 2000 according to the present disclosure configured in this manner may be applied to various devices. Specifically, they can be applied to means of transportation such as electric bicycles, electric vehicles V, hybrid vehicles, and an energy storage system (ESS), but the battery module 1000 and the battery pack 2000 are not limited thereto and can be applied to various devices that can use secondary batteries.

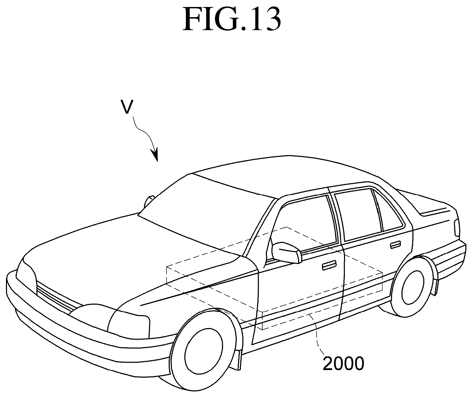

FIG. 13 is a diagram illustrating an electric vehicle (V) equipped with the battery pack 2000. The electric vehicle V can be driven in such a manner that wheels are driven by a motor that receives power from the battery pack 2000.

The present disclosure has been described with reference to preferred embodiments as described above, but is not limited to the above embodiments, and various changes and modifications may be made by those skilled in the art within the scope that does not depart from the spirit of the present disclosure.

### [INDUSTRIAL APPLICABILITY]

The present disclosure can provide a battery module and pack capable of minimizing bending of a busbar frame by reinforcing the rigidity of the busbar frame.

## Claims

1. A battery module comprising:
a battery cell stack in which a plurality of battery cells is stacked;
a module case accommodating the battery cell stack therein;
a busbar frame disposed on one side of the battery cell stack;
one or more busbars disposed in the busbar frame; and
one or more reinforcing members disposed in the busbar frame.

2. The battery module of claim 1, wherein the busbar frame includes a groove into which one of the reinforcing members is inserted.

3. The battery module of claim 2, wherein the groove includes a pair of bent surface portions disposed on opposite sides of the groove and bent in a direction toward the busbars, and the reinforcing member includes a pair of wing portions provided on opposite sides of the reinforcing member and disposed on the pair of bent surface portions.

4. The battery module of claim 1, wherein the busbar frame includes one or more busbar mounting portions to which the busbars are coupled.

5. The battery module of claim 4, wherein the one or more reinforcing members are disposed on the one or more busbar mounting portions, respectively.

6. The battery module of claim 5, wherein each busbar mounting portion includes a groove into which one of the reinforcing members is inserted.

7. The battery module of claim 6, wherein each groove is formed in a concave shape in a direction toward the battery cell stack.

8. The battery module of claim 1, wherein the one or more busbars are disposed in front of the one or more reinforcing members in the busbar mounting portion.

9. The battery module of claim 1, wherein each reinforcing member is made of a metal material.

10. The battery module of claim 1, wherein each reinforcing member is made of a steel plate.

11. The battery module of claim 1, wherein each busbar is connected to electrode leads of the battery cells.

12. The battery module of claim 1, wherein the busbar frame is one of two busbar frames disposed on first and second opposite sides of the battery cell stack, and one of the reinforcing members is disposed in each of the two busbar frames disposed.

13. The battery module of claim 1, further comprising an insulating cover disposed on an outside of the busbar frame.

14. The battery module of claim 13, further comprising an end plate disposed on an outside of the insulating cover.
